# EUROPÄISCHE PATENTSCHRIFT

(11) **EP 3 533 691 B1**
(45) Veröffentlichungstag und Bekanntmachung des Hinweises auf die Patenterteilung: **04.08.2021**
(21) Anmeldenummer: 19158139.6
(22) Anmeldetag: 19.02.2019
(51) Int. Cl.: B62D 63/02, B62D 33/077, B60P 3/00

(54) **FORTBEWEGUNGSMITTEL UND MODULARE FAHRGASTZELLE FÜR EIN FORTBEWEGUNGSMITTEL**
MEANS OF LOCOMOTION AND MODULAR PASSENGER COMPARTMENT FOR A MEANS OF LOCOMOTION
MOYEN DE DÉPLACEMENT ET HABITACLE MODULAIRE POUR UN MOYEN DE DÉPLACEMENT

(30) Priorität: 02.03.2018 DE 102018203120
(43) Veröffentlichungstag der Anmeldung: 04.09.2019
(73) Patentinhaber: Volkswagen Aktiengesellschaft, 38440 Wolfsburg (DE)
(72) Erfinder: Krohn, Matthias, 27711 Osterholz-Scharmbeck (DE); Bode, Mareike, 12047 Berlin (DE); Garcia, Alvaro, 14059 Berlin (DE)

(56) Entgegenhaltungen:
- EP-A1- 1 538 072
- EP-A1- 3 310 615
- WO-A1-2013/156639
- CN-B- 102 285 377
- DE-A1-102016 014 882
- DE-U1- 29 804 938
- US-A1- 2015 006 005

## Beschreibung

### Stand der Technik

Die vorliegende Erfindung betrifft ein Fortbewegungsmittel sowie eine modulare Fahrgastzelle für ein Fortbewegungsmittel. Insbesondere betrifft die vorliegende Erfindung ein Fortbewegungsmittel zur Auslieferung von Gütern im Straßenverkehr.

Der zunehmende Versandhandel weckt den Bedarf an flexiblen und kostenoptimierten Logistiklösungen für die Auslieferung von Sendungen an den Endkunden. Insbesondere das Problem der "letzten Meile" ist bislang nicht zufriedenstellend gelöst.

DE 10 2011 120 991 A1 offenbart ein Assistenzsystem zur Güterzustellung mittels eines Fahrzeugs, welches eine "follow-me-Funktion" aufweist. Hierbei folgt das Fahrzeug einem Boten entlang der Straße, während der Bote die Pakete aus dem Fahrzeug an die Adressaten ausliefert.

DE 10 2009 020 388 A1 offenbart einen standardisierten Frachtbehälter, der mit Fracht bestückt in das Zustellfahrzeug eingebracht wird, wodurch sich die Beladungszeit verkürzt.

DE 103 05 333 A1 offenbart ein Verfahren zur Lieferung und Zustellung von Sendungen, wobei ein am Ort der Zustellung angebrachtes elektronisch verschließbares Fach die Zustellung auch bei Abwesenheit des Adressaten ermöglicht.

DE 10 2015 204 947 A1 offenbart eine Vorrichtung zum Betrieb eines wahlweise manuell steuerbaren oder zu autonomem Fahren fähigen Fahrzeugs für einen Zustellvorgang. Wenn der Zusteller das Kraftfahrzeug abstellt, wird anhand eines elektronischen Aufgabenplans des Fahrers geprüft, ob es für die Aufgabenerledigung günstiger wäre, wenn das Kraftfahrzeug am Abstellort stehen bleiben würde oder wenn es zu einem in Fahrtrichtung liegenden Haltepunkt weiterfahren würde.
CN 102 285 377 B offenbart eine modulare Fahrgastzelle für ein Fortbewegungsmittel gemäß dem Oberbegriff des Anspruchs 1.

Weiter besteht grundsätzlich Bedarf, die Verkehrsdichte im Straßenverkehr, insbesondere in Ballungszentren, zu senken. Hierzu wäre es wünschenswert, die von Fortbewegungsmitteln eingenommene Grundfläche/Straßenfläche zu verringern.

Die vorstehend genannte Aufgabe wird erfindungsgemäß durch eine modulare Fahrgastzelle für ein Fortbewegungsmittel gelöst. Als modulare Fahrgastzelle eines Fortbewegungsmittels sei im Rahmen der vorliegenden Erfindung auch ein abgeschlossener Bereich eines Fortbewegungsmittels verstanden, welcher im Wesentlichen für die Aufbewahrung sowie den Transport von Gütern geeignet und/oder vorgesehen ist ("Laderaum" oder "Gepäckraum"). Das Fortbewegungsmittel kann beispielsweise als PKW, Transporter, LKW, Luft-und/oder Wasserfahrzeug ausgestaltet sein. Die modulare Fahrgastzelle weist ein erstes Fahrgastzellenteil und ein zweites Fahrgastzellenteil sowie ein drittes Fahrgastzellenteil auf. Die Fahrgastzellenteile können im Wesentlichen unverformbare starre Gebilde darstellen. Insbesondere können die Fahrgastzellenteile tragende Strukturen, Außenwandungen, Dachteile und/oder Bodenteile einer Kabine des Fortbewegungsmittels darstellen. Sie weisen eine jeweilige Kante auf, welche eine Grenze zwischen einer Außenhaut des Fortbewegungsmittels und einem Volumen der Fahrgastzelle bzw. einer dem Fahrgastraum zugewandten Oberfläche säumt. Mit anderen Worten stellt die Kante sozusagen eine (vollständig umlaufende oder anteilige) Umrandung einer Schnittfläche durch die Fahrgastzelle und das durch sie abgeschlossene Volumen dar. Die Kante kann insbesondere einer Linie folgen, welche sich um eine Schnittebene durch das Volumen der Fahrgastzelle ergibt. Ein Fahrgastzellenteil kann eine oder mehrere Kanten aufweisen, an welchen erfindungsgemäß weitere Fahrgastzellenteile angebracht werden können. Erfindungsgemäß ist die erste Kante korrespondierend zur zweiten Kante und zur dritten Kante ausgestaltet. Mit anderen Worten kann das erste Fahrgastzellenteil mit der ersten Kante zur Bildung der modularen Fahrgastzelle an der zweiten Kante des zweiten Fahrgastzellenteils oder an der dritten Kante des dritten Fahrgastzellenteils angeordnet werden. Das zweite Fahrgastzellenteil weist zudem eine vierte Kante auf, welche nicht mit der zweiten Kante identisch ist. Über die vierte Kante, welche zur dritten Kante des dritten Fahrgastzellenteils korrespondierend ausgestaltet ist, kann zusätzlich das zweite Fahrgastzellenteil am dritten Fahrgastzellenteil angeordnet werden. Auf diese Weise können entweder das erste Fahrgastzellenteil und das dritte Fahrgastzellenteil ohne das zweite Fahrgastzellenteil zur Definition eines gemeinsamen Fahrgastzellenteils der modularen Fahrgastzelle verwendet werden oder das zweite Fahrgastzellenteil zwischen das erste Fahrgastzellenteil und das dritte Fahrgastzellenteil gebracht werden, um alle drei Fahrgastzellenteile zu einem gemeinsamen Fahrgastzellenteil der modularen Fahrgastzelle, insbesondere zu einer vollständigen modularen Fahrgastzelle, zusammenzusetzen. Die Fahrgastzellenteile stellen auf diese Weise eine Außenhaut der modularen Fahrgastzelle dar. Auf diese Weise wird eine volumenveränderliche Fahrgastzelle für ein Fortbewegungsmittel dargestellt, durch welche auch eine veränderliche Grundfläche im Straßenverkehr eingenommen wird. Überdies werden die Masse und somit die Energieeffizienz des erfindungsgemäß ausgestalteten Fortbewegungsmittels veränderlich und an den jeweiligen Einsatzzweck anpassbar. Insbesondere kann eine veränderliche Gesamtlänge des erfindungsgemäß ausgestalteten Fortbewegungsmittels realisiert werden, wodurch gegebenenfalls unterschiedliche Straßen/Verkehrsräume befahren werden können. Beispielsweise kann sich der Wendekreis in Abhängigkeit der Anzahl verwendeter Fahrgastzellenteile verändern. Im Ergebnis wird eine flexible Ausgestaltung eines die erfindungsgemäße modulare Fahrgastzelle aufweisenden Fortbewegungsmittels in Abhängigkeit des Einsatzzwecks, insbesondere des Transportauftrages, möglich. Eine weitere Funktion der erfindungsgemäßen modularen Fahrgastzelle ergibt sich durch die Bereitstellung einer Service-Öffnung bzw. eines Service-Tresens in einem Fahrgastzellenteil, über welchen ein vor dem Fahrgastzellenteil befindlicher Kunde einen Transportbehälter in die Fahrgastzelle einbringen kann. Der Service-Tresen kann durch einen in der Fahrgastzelle befindlichen Service-Mitarbeiter besetzt sein. In jedem Falle weist der Service-Tresen einen nach Art einer Paket-Station ausgestaltete automatische Annahme-/Ausgabemechanismus auf. Auf diese Weise kann die erfindungsgemäße modulare Fahrgastzelle auch zur mobilen Gepäckaufbewahrung verwendet werden. Bei der Abgabe eines Gepäckstücks erhält der Kunde eine Kennung, welche er beispielsweise über eine Applikation auf seinem Smartphone abspeichern kann. Wünscht der Kunde, sein Gepäckstück wieder in Empfang zu nehmen, kann er über die Applikation in Erfahrung bringen, wo sich die modulare Fahrgastzelle derzeit aufhält oder optional eine come-to-me-Funktion der modularen Fahrgastzelle aktivieren, um sein Gepäckstück an seinem aktuellen Aufenthaltsort oder einem zu vereinbarenden Übergabeort in Empfang zu nehmen.

Die Unteransprüche zeigen bevorzugte Weiterbildungen der Erfindung.

Bevorzugt kann die erste Kante und/oder die zweite Kante und/oder die dritte Kante eine umlaufende Kante sein. Mit anderen Worten kann die jeweilige Kante eine in sich geschlossene Kante sein, welche mit noch anderen Worten eine Schnittfläche durch das Volumen der Fahrgastzelle vollständig umläuft/umschließt. Sowohl Wand- als auch Dach- als auch Bodenbestandteile der Fahrgastzelle werden somit durch einen jeweiligen Fahrgastzellenteil bereitgestellt. Dies ermöglicht eine fluid-und staubdichte sowie akustisch gut isolierte Ausgestaltung der Fahrgastzellenteile bzw. der aus ihnen zusammengesetzten modularen Fahrgastzelle.

Die Kanten der Fahrgastzellenteile können beispielsweise auf Stoß miteinander verbunden werden. Mit anderen Worten kann ein Flansch an der jeweiligen Kante vorgesehen sein, um eine mechanische Verbindung zu unterstützen. Am Flansch kann eine Verriegelung angeordnet sein, um insbesondere ein Lösen der Verbindung während der Fahrt zu vermeiden. Alternativ können die Kanten der Fahrgastzellenteile überlappend zueinander angeordnet werden. Hierzu weisen die Kantenbereiche der Fahrgastzellenteile zueinander korrespondierende Bereiche mit unterschiedlichen Abmessungen bzw. Durchmessern auf. Eine überlappende Anordnung zweier Fahrgastzellenteile ermöglichen eine besonders dichte und stabile Verbindung.

Insbesondere für den Fall, dass die Kanten zueinander überlappend angeordnet werden, kann ein variables Volumen für die Fahrgastzelle realisiert werden. Hierbei können unterschiedliche Überlapp-Längen realisiert werden, um eine stufenlose und/oder abgestufte Änderung des Fahrgastzellenvolumens zu ermöglichen. Als "Fahrgastzelle" im Sinne der vorliegenden Erfindung wird insbesondere eine in sich steife Hülle eines nutzbaren Raumes innerhalb eines Fortbewegungsmittels verstanden. Insbesondere werden ein Anhänger und ein Zugfahrzeug nicht als eine gemeinsame Fahrgastzelle bereitstellend erachtet. Jeder Bereich der erfindungsgemäßen modularen Fahrgastzelle weist daher bevorzugt stets eine identische Fahrtrichtung auf. Durch diese steife Gestalt kann vermieden werden, dass Personen oder Transportgüter innerhalb der Fahrgastzelle durch Kurvenfahrten in ihrem Komfort oder hinsichtlich der Transportsicherheit beschränkt bzw. gefährdet werden.

Um eine staub- und fluiddichte Fahrgastzelle bereitzustellen, können Dichtelemente zwischen den Fahrgastzellenteilen entlang der Kanten angeordnet sein. Beispielsweise können Schaum- und/oder Gummielemente die erste Kante, die zweite Kante und dritte Kante sowie die vierte Kante säumen. Selbstverständlich kann bei Bereitstellung einer geeigneten Anlagefläche/eines geeigneten Flansches ein Dichtelement pro Stoßstelle zwischen zwei Kanten hinreichend sein. Um eine Elektrifizierung mehrerer Fahrgastzellenteile möglichst einfach bereitstellen zu können, können elektrische Schnittstellen im Bereich der Kanten vorgesehen sein. Diese können insbesondere in Längsrichtung der Fahrgastzelle orientiert sein, um eine Kontaktierung zweier Schnittstellen im Zuge einer mechanischen Verbindung zweier Fahrgastzellenteile automatisch bzw. im Wesentlichen automatisch vorzunehmen. Alternativ oder zusätzlich können informationstechnische Schnittstellen im Bereich der jeweiligen Kante vorgesehen sein, um Informationen (z.B. elektrisch und/oder optisch und/oder akustisch) zwischen den Fahrgastzellenteilen austauschen zu können. Die elektrische Schnittstelle sowie die informationstechnische Schnittstelle können ein und dieselbe Schnittstelle sein. Insbesondere können jeweilige Leitungen (Informations- bzw. Energie-Leitungen) in einem gemeinsamen Steckgesicht bzw. Steckergesicht angeordnet sein. Eine Verriegelung der jeweiligen Schnittstellen ist insbesondere dann nicht erforderlich, sofern eine mechanische Verriegelung der Fahrgastzellenteile miteinander zu hinreichend geringen Toleranzen führt. Auf diese Weise kann nach dem Entriegeln der Fahrgastzellenteile verhindert werden, dass die elektrische und/oder die informationstechnische Schnittstelle Schaden nehmen bzw. ein zusätzlicher Entriegelungsvorgang für die elektrische/informationstechnische Schnittstelle erforderlich wird.

Das Fortbewegungsmittel kann insbesondere ein automatisch fahrfähiges Fortbewegungsmittel sein. Es kann sich hierbei beispielsweise um ein Gütertransport-Fortbewegungsmittel handeln. Insbesondere kann ein Auslieferungsfahrzeug erfindungsgemäß ausgestaltet werden. Das erfindungsgemäße Fortbewegungsmittel kann durch eine follow-me- bzw. stay-tome-Funktion insbesondere für die letzte Meile eines Zustellvorgangs eingerichtet sein. Hierbei folgt das Fortbewegungsmittel dem Zusteller bzw. einem von ihm getragenen elektronischen Gerät oder Marker oder kommt auf Bedarf von einer entlegenen Halteposition an einen geeigneten Treffpunkt, um den Zusteller aufzunehmen oder Aufnahmen von Transportgütern durch den Zusteller zu vereinfachen. Das Fortbewegungsmittel kann insbesondere elektrisch antreibbar sein. Insbesondere kann das Fortbewegungsmittel einen elektrochemischen Energiespeicher aufweisen, mittels dessen eine elektrische Traktionsmaschine mit elektrischer Energie versorgt werden kann. Hierdurch können Lärm- und Schadstoffemissionen vermieden und Verkehrsräume, in welchen Verbrennungsmotoren verboten sind, befahren werden.

Die Fahrgastzellenteile der modularen Fahrgastzelle können einzeln oder sämtlich Regalelemente bzw. Regale zur Aufnahme von Transportgut aufweisen. Insbesondere können vordefinierte Transportbehälter mit in den Regalelementen vorgesehenen Verankerungen in Eingriff gebracht werden, um Unordnung durch starke Längs- und/oder Querbeschleunigungen zu vermeiden. Insbesondere werden hierbei formschlüssige Verbindungen zwischen den Regalelementen und den Transportbehältern eingegangen.

Die erfindungsgemäße modulare Fahrgastzelle ist nicht auf drei Fahrgastzellenteile beschränkt. Vielmehr können beispielsweise ein viertes Fahrgastzellenteil und weitere Fahrgastzellenteile vorgesehen sein, welche alternativ oder zusätzlich zu jeweiligen bislang genannten Fahrgastzellenteilen in die modulare Fahrgastzelle eingebracht werden können. Besonders flexibel wird die Gestaltung der modularen Fahrgastzelle, indem möglichst viele der Fahrgastzellenteile zueinander korrespondierende Kanten aufweisen, so dass die Reihenfolge der Fahrgastzellenteile in weitem Rahmen beliebig ist. Insbesondere eine Front der Fahrgastzelle sowie ein Heck der Fahrgastzelle können durch Fahrgastzellenteile gebildet werden, welche lediglich eine Kante aufweisen, welche zu einem der weiteren Fahrgastzellenteile korrespondiert. Insbesondere das erste Fahrgastzellenteil und das dritte Fahrgastzellenteil können so ausgestaltet sein, um ein besonders kurzes Fortbewegungsmittel zu realisieren. Mit anderen Worten kann das erste Fahrgastzellenteil als Fahrzeugfront und das dritte Fahrgastzellenteil als Fahrzeugheck ausgestaltet sein (oder andersherum).

Mehrere, insbesondere sämtliche, Fahrgastzellenteile können eine Schnittstelle zur temporären Verbindung mit einer Fahrlafette aufweisen. Insbesondere kann eine mechanische Schnittstelle zur crash-sicheren Verbindung zwischen dem Fahrgastzellenteil und der Fahrlafette vorgesehen sein. Dies schließt nicht aus, dass elektrische und/oder informationstechnische Schnittstellen zwischen dem Fahrgastzellenteil und der Fahrlafette vorgesehen sind, über welche insbesondere in einem Traktionsenergiespeicher gespeicherte elektrische Energie übertragen werden kann. Mit anderen Worten können mehrere Fahrgastzellenteile mit einer gemeinsamen Fahrlafette verbunden werden. Dies schließt nicht aus, dass das Fortbewegungsmittel mehrere Fahrlafetten(-teile) verwendet, welche insbesondere mechanisch auch untereinander bedarfsweise verknüpft werden können. Insbesondere können die Schnittstellen derart einfach handhabbar sein, dass eine tageweise Konfiguration des erfindungsgemäßen Fortbewegungsmittels bzw. der modularen Fahrgastzelle erfolgen kann und somit die Kapazität des Fortbewegungsmittels/der modularen Fahrgastzelle bestmöglich an den Einsatzzweck/Transportauftrag des bevorstehenden Tages angepasst werden kann.

Die Fahrgastzellenteile können optional einen jeweiligen Teil einer Fahrlafette aufweisen. Insbesondere kann der Teil der Fahrlafette dauerhaft mit dem jeweiligen Fahrgastzellenteil ausgestaltet sein. Eine tageweise Konfiguration des Fortbewegungsmittels bringt auf diese Weise immer wieder neue Kombinationen aus Teilen von Fahrlafetten zusammen, sofern die Fahrgastzellenteile, mit welchen sie verbunden sind, ausgetauscht oder re-rangiert werden.

Gemäß einem zweiten Aspekt der vorliegenden Erfindung wird ein Fortbewegungsmittel vorgeschlagen, welches eine modulare Fahrgastzelle gemäß dem oben genannten ersten Erfindungsaspekt aufweist. Zusätzlich ist eine Fahrlafette vorgesehen, welche mit mehreren, insbesondere sämtlichen, Fahrgastzellenteilen mechanisch verbunden ist. Dies schließt nicht aus, dass die Fahrlafette selbst aus mehreren Fahrlafettenteilen zusammengesetzt ist. Die Verknüpfung der Fahrlafettenteile kann unabhängig von der Verknüpfung der Fahrgastzellenteile erfolgen. Bevorzugt kann die Verknüpfung der Fahrlafettenteile jedoch einhergehen mit der Verknüpfung der Fahrgastzellenteile. Auf diese Weise entscheidet die Reihenfolge der Fahrlafettenteile über die Reihenfolge der Fahrgastzellenteile (und andersherum).

Weitere Merkmale, Vorteile und Einzelheiten zum Gegenstand der vorliegenden Erfindung werden in Verbindung mit den beigefügten Zeichnungen nachfolgend erläutert. Es zeigen:
- Figur 1: eine perspektivische Ansicht eines Entnahmevorgangs einer Sendung aus einem Ausführungsbeispiel eines erfindungsgemäßen Fortbewegungsmittels;
- Figur 2: eine perspektivische Explosionsansicht eines Ausführungsbeispiels eines erfindungsgemäßen Fortbewegungsmittels mit einem Ausführungsbeispiel einer erfindungsgemäßen modularen Fahrgastzelle;
- Figur 3: eine schematische Darstellung eines Ausführungsbeispiels eines erfindungsgemäßen Fahrgastzellenteils umfassend zwei teleskopartig miteinander verknüpfbare Fahrgastzellenteile;
- Figur 4: eine perspektivische Darstellung eines Ausführungsbeispiels eines erfindungsgemäßen Fahrgastzellenteils, welches eine mechanische Verriegelung im Bereich der ersten Kante aufweist; und
- Figur 5: eine perspektivische Darstellung einer möglichen Ausgestaltung eines Ausführungsbeispiels einer Fahrlafette und eines ersten Fahrgastzellenteils.

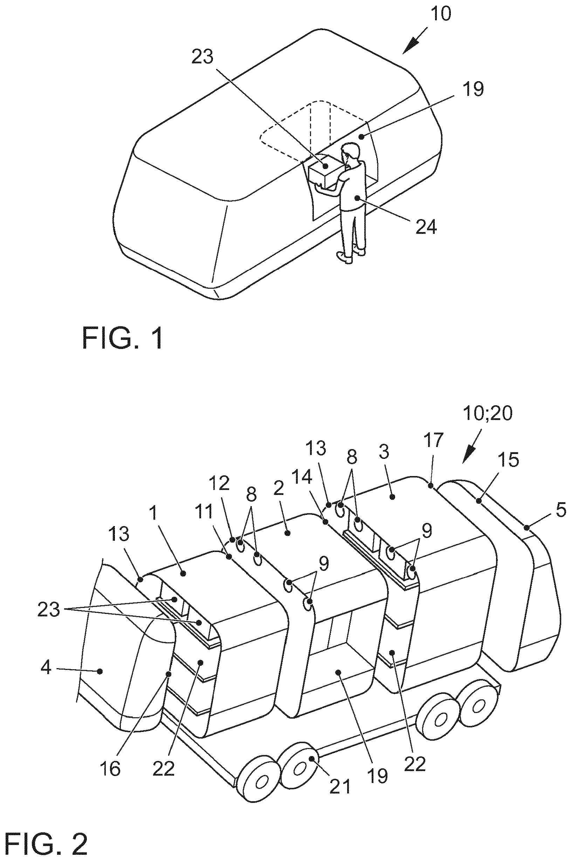

Figur 1 zeigt einen Anwender 24, welcher einen Transportbehälter 23 aus einem Service-Tresen 19 entnimmt. Das dargestellte Fortbewegungsmittel 10 dient als Gütertransport- bzw. Auslieferungsfahrzeug nach Art eines Zustellfahrzeugs eines Kurier-Unternehmens. Sobald der Anwender 24 den Transportbehälter 23 entnommen und seinen Fußweg zum Endkunden angetreten hat, fährt das Fortbewegungsmittel 10 an eine geeignete Übergabeposition, an welcher der Anwender 24 eine weitere Sendung aufnehmen und deren Adressaten per pedes zustellen kann.

Figur 2 zeigt eine perspektivische Explosionsansicht eines erfindungsgemäßen Fortbewegungsmittels 10, welches aus einem Ausführungsbeispiel einer erfindungsgemäßen modularen Fahrgastzelle 20 und einem Ausführungsbeispiel einer erfindungsgemäßen Fahrlafette 21 zusammengesetzt ist. Die modulare Fahrgastzelle 20 besteht ihrerseits aus fünf Fahrgastzellenteilen 1, 2, 3, 4 und 5. Die Fahrgastzellenteile 1, 4 weisen umlaufende, zueinander korrespondierende Kanten 13, 16 auf, über welche sie mechanisch miteinander verknüpft werden können. Das Fahrgastzellenteil 4 bildet ein Heck des Fortbewegungsmittels 10. Das Fahrgastzellenteil 1 weist in seinem Innenraum Regalelemente 22 zur Aufnahme von Transportbehältern 23 auf. Eine erste Kante 11 des ersten Fahrgastzellenteils 1 korrespondiert zu einer zweiten Kante 12 des zweiten Fahrgastzellenteils 2. Überdies sind am zweiten Fahrgastzellenteil 2 elektrische Schnittstellen 8 und informationstechnische Schnittstellen 9 angeordnet, welche mit (nicht dargestellten) Schnittstellen im ersten Fahrgastzellenteil 1 korrespondieren, um die Übertragung elektrischer Energie sowie von Informationen zu ermöglichen. Eine vierte Kante 14 des zweiten Fahrgastzellenteils 2 korrespondiert zu einer dritten Kante 13 des dritten Fahrgastzellenteils 3, welches ebenfalls Regalelemente 22 zur Aufnahme (nicht dargestellter) Transportbehälter aufweist. Die vierte Kante 14 und die dritte Kante 13 sind als nicht-umlaufende Kanten ausgestaltet. Sie säumen lediglich Dach- und Wandbereiche der Fahrgastzellenteile 2, 3. Auch im Bereich der dritten Kante 13 sind elektrische Schnittstellen 8 und informationstechnische Schnittstellen 9 vorgesehen, welche mit (nicht dargestellten) Schnittstellen im Bereich der vierten Kante 14 korrespondieren. Eine weitere Kante 17 des dritten Fahrgastzellenteils 3 korrespondiert zu der einzigen Kante 15 des Fahrgastzellenteils 5, welches die Fahrzeugfront bildet. Das zweite Fahrgastzellenteil 2 weist einen Service-Tresen 19 zur Aufnahme/Ausgabe von Transportbehältern auf. Die Fahrgastzellenteile 1, 2, 3 sind mechanisch mit der Fahrlafette 21 verbunden. Diese Verbindung ist temporär dergestalt, dass eine tägliche Konfiguration der Fahrgastzelle 20 in Abhängigkeit der anstehenden Beförderungsaufträge mühelos erfolgen kann. Insbesondere kann in einem hierzu vorgesehenen Logistikzentrum eine weitgehend automatisierte Verknüpfung der Fahrgastzellenteile 1, 2, 3, 4, 5 miteinander sowie der sie umfassenden Fahrgastzelle 20 mit der Fahrlafette 21 erfolgen.

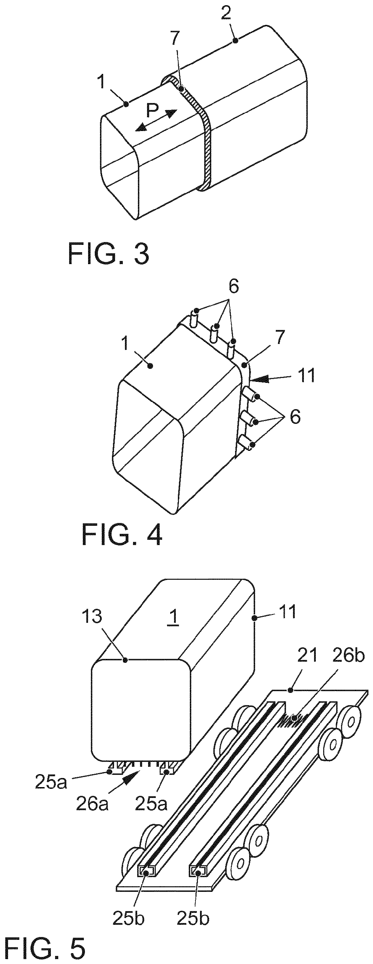

Figur 3 zeigt eine Ausgestaltung einer Schnittstelle zwischen einem ersten Fahrgastzellenteil 1 und einem zweiten Fahrgastzellenteil 2, welche teleskopartig entlang eines Doppelpfeils P verschieblich zueinander angeordnet sind. Über ein Dichtelement 7 wird eine im Wesentlichen fluid- und staubdichte Verbindung zwischen den Fahrgastzellenteilen 1, 2 ermöglicht. Die teleskopartige Verschieblichkeit der Fahrgastzellenteile 1, 2 ermöglicht ein variables Volumen der durch sie gebildeten Fahrgastzelle. Die Größe des ersten Fahrgastzellenteils 1 ist dabei derart gewählt, dass es im Wesentlichen spaltfrei von dem zweiten Fahrgastzellenteil 2 aufgenommen wird.

Figur 4 zeigt eine Ausgestaltung einer ersten Kante 11 eines Ausführungsbeispiels eines ersten Fahrgastzellenteils 1. Zur mechanischen Verriegelung mit einem angrenzenden (nicht dargestellten) Fahrgastzellenteil sind Verriegelungsbolzen 6 nach Art eines Panzerschranks im Bereich der ersten Kante 11 angeordnet. Zudem ist eine umlaufende Dichtung durch ein Dichtelement 7 bereitgestellt. Auf diese Weise kann eine mechanisch verlässliche sowie fluid- und staubdicht ausgestaltete Verbindung mit einem weiteren (nicht dargestellten), korrespondierend ausgestalteten Fahrgastzellenteil erfolgen.

Figur 5 zeigt ein Ausführungsbeispiel einer erfindungsgemäß verwendbaren Fahrlafette 21 in korrespondierender Darstellung zu einem Ausführungsbeispiel eines erfindungsgemäß verwendbaren ersten Fahrgastzellenteils 1. U-Profile 25b auf einer Oberseite der Fahrlafette 21 ermöglichen ein formschlüssiges Einschieben an einer Unterseite des ersten Fahrgastzellenteils 1 angeordneter T-Profile 25a. Auf diese Weise kann eine reversible mechanische Schnittstelle zwischen der Fahrlafette 21 und dem ersten Fahrgastzellenteil 1 realisiert werden. Ist das erste Fahrgastzellenteil 1 an seiner Zielposition auf der Fahrlafette 21 angeordnet, können Verriegelungselemente (nicht dargestellt) entsprechend den in Figur 4 gezeigten Verriegelungsbolzen 6 eine unerwünschte relative Verschiebung zwischen dem ersten Fahrgastzellenteil 1 und der Fahrlafette 21 verhindern. Überdies sind Schleifkontakte 26a, 26b derart korrespondierend an der Unterseite des ersten Fahrgastzellenteils 1 sowie an der Oberseite der Fahrlafette 21 angeordnet, dass sich eine elektrische und informationstechnische Schnittstelle schließt, sobald das erste Fahrgastzellenteil 1 an seiner Zielposition auf der Fahrlafette 21 angeordnet ist.

### Bezugszeichenliste

- 1: erstes Fahrgastzellenteil
- 2: zweite Fahrgastzellenteil
- 3: drittes Fahrgastzellenteil
- 4: viertes Fahrgastzellenteil
- 5: fünftes Fahrgastzellenteil
- 6: Verriegelungsbolzen
- 7: Dichtelement
- 8: elektrische Schnittstelle
- 9: informationstechnische Schnittstelle
- 10: Fortbewegungsmittel
- 11-17: Kante
- 19: Service-Tresen
- 20: modulare Fahrgastzelle
- 21: Fahrlafette
- 22: Regalelement
- 23: Transportbehälter
- 24: Anwender
- 25a: T-Profil
- 25b: U-Profil
- 26a,b: Schleifkontakte
- P: Doppelpfeil

## Patentansprüche

1. Modulare Fahrgastzelle (20) für ein Fortbewegungsmittel (10) umfassend:
- ein erstes Fahrgastzellenteil (1) mit einer ersten Kante (11),
- ein zweites Fahrgastzellenteil (2) mit einer zweiten Kante (12),
- ein drittes Fahrgastzellenteil (3) mit einer dritten Kante (13), wobei die erste Kante (11)
- zur zweiten Kante (12) sowie
- zur dritten Kante (13) korrespondierend ausgestaltet ist, um ein Volumen der Fahrgastzelle (20) wahlweise mittels des zweiten Fahrgastzellenteils (2) oder mittels des dritten Fahrgastzellenteils (3) nach außen abzuschließen und wobei das zweite Fahrgastzellenteil (2) weiter eine vierte Kante (14) aufweist, welche zur dritten Kante (13) korrespondierend ausgestaltet ist, um das Volumen der Fahrgastzelle (20) mittels des dritten Fahrgastzellenteils (3) nach außen abzuschließen, wobei die Fahrgastzellenteile (1, 2, 3) eine jeweilige Schnittstelle (25a) zur temporären Verbindung mit einer gemeinsamen Fahrlafette (21) aufweisen,
**dadurch gekennzeichnet, dass**
mindestens ein Fahrgastzellenteil (1) einen Service-Tresen (19) mit einem nach Art einer Paket-Station ausgestalteten automatischen Annahme- und Ausgabemechanismus aufweist, über welchen ein vor dem Fahrgastzellenteil (1) stehender Kunde (24) einen Transportbehälter (23) in die Fahrgastzelle (20) einbringen kann.

2. Modulare Fahrgastzelle nach Anspruch 1, wobei die erste Kante (11) und/oder die zweite Kante (12) und/oder die dritte Kante (13) eine umlaufende Kante ist bzw. sind.

3. Modulare Fahrgastzelle nach Anspruch 1 oder 2, wobei
- die erste Kante (11) und die zweite Kante (12) oder
- die erste Kante (11) und die dritte Kante (13) oder
- die zweite Kante (12) und die dritte Kante (13) eingerichtet sind, auf Stoß oder überlappend zueinander angeordnet zu werden.

4. Modulare Fahrgastzelle nach einem der vorstehenden Ansprüche, wobei
- die erste Kante (11) und die zweite Kante (12) oder
- die erste Kante (11) und die dritte Kante (13) oder
- die zweite Kante (12) und die dritte Kante (13) eingerichtet sind, überlappend zueinander angeordnet zu werden, um ein variables Volumen für die Fahrgastzelle (20) nach außen abzuschließen.

5. Modulare Fahrgastzelle nach einem der vorstehenden Ansprüche, wobei
- ein mechanisches Verriegelungselement (6) und/oder
- ein Dichtelement (7) und/oder
- eine elektrische Schnittstelle (8) und/oder eine informationstechnische Schnittstelle (9) im Bereich der ersten Kante (11) und/oder der zweiten Kante (12) und/oder der dritten Kante (13) zur Verbindung zweier Fahrgastzellenteile (1, 2, 3) vorgesehen sind.

6. Modulare Fahrgastzelle nach einem der vorstehenden Ansprüche, wobei das Fortbewegungsmittel (10)
- ein automatisch fahrfähiges Fortbewegungsmittel (10) und/oder
- ein Gütertransport-Fortbewegungsmittel (10) und/oder
- ein elektrisch antreibbares Fortbewegungsmittel (10)
ist.

7. Modulare Fahrgastzelle nach einem der vorstehenden Ansprüche, wobei das erste Fahrgastzellenteil (1) und/oder das zweite Fahrgastzellenteil (2) Regalelemente (22) zur Aufnahme und insbesondere Verankerung von Transportbehältern (23) aufweisen.

8. Modulare Fahrgastzelle nach einem der vorstehenden Ansprüche, weiter umfassend ein viertes Fahrgastzellenteil (4), welches eine Kante (16) zur Verbindung mit einem weiteren Fahrgastzellenteil (5) aufweist und welches eingerichtet ist, ein Volumen der Fahrgastzelle (20) mittels des weiteren Fahrgastzellenteils (5) nach außen abzuschließen.

9. Fortbewegungsmittel (10) umfassend eine modulare Fahrgastzelle (20) nach einem der Ansprüche 1 bis 8 und eine Fahrlafette (21), welche über eine mechanische Schnittstelle (25a, 25b) mit dem ersten Fahrgastzellenteil (1) und/oder dem zweiten Fahrgastzellenteil (2) und/oder dem dritten Fahrgastzellenteil (3) jeweils unmittelbar mechanisch und insbesondere auch informationstechnisch und/oder elektrisch verbunden ist.

## Claims

1. Modular passenger compartment (20) for a means of locomotion (10), comprising:
- a first passenger compartment part (1) having a first edge (11),
- a second passenger compartment part (2) having a second edge (12),
- a third passenger compartment part (3) having a third edge (13), wherein the first edge (11) is designed to correspond
- to the second edge (12) and
- to the third edge (13) in order to selectively close off a volume of the passenger compartment (20) to the outside by means of the second passenger compartment part (2) or by means of the third passenger compartment part (3), and wherein the second passenger compartment part (2) further has a fourth edge (14) which is designed to correspond to the third edge (13) in order to close off the volume of the passenger compartment (20) to the outside by means of the third passenger compartment part (3), wherein the passenger compartment parts (1, 2, 3) have a respective interface (25a) for temporary connection to a common driving mount (21),
**characterized in that**
at least one passenger compartment part (1) has a service counter (19) with an automatic accepting and dispensing mechanism, designed in the manner of a package station, via which a customer (24) standing in front of the passenger compartment part (1) can introduce a transport container (23) into the passenger compartment (20).

2. Modular passenger compartment according to claim 1, wherein the first edge (11) and/or the second edge (12) and/or the third edge (13) is or are (a) circumferential edge(s).

3. Method according to claim 1 or 2, wherein
- the first edge (11) and the second edge (12), or
- the first edge (11) and the third edge (13), or
- the second edge (12) and the third edge (13) are configured to be arranged to abut against or overlap one another.

4. Modular passenger compartment according to one of the preceding claims, wherein
- the first edge (11) and the second edge (12), or
- the first edge (11) and the third edge (13), or
- the second edge (12) and the third edge (13) are configured to be arranged to overlap one another, in order to close off a variable volume for the passenger compartment (20) to the outside.

5. Modular passenger compartment according to one of the preceding claims, wherein
- a mechanical locking element (6), and/or
- a sealing element (7), and/or
- an electrical interface (8), and/or an information technology interface (9) are provided in the region of the first edge (11) and/or of the second edge (12) and/or of the third edge (13) for connecting two passenger compartment parts (1, 2, 3).

6. Modular passenger compartment according to one of the preceding claims, wherein the means of locomotion (10) is
- an automatically-drivable means of locomotion (10), and/or
- a means of locomotion (10) for transporting goods, and/or
- an electrically-drivable means of locomotion (10).

7. Modular passenger compartment according to one of the preceding claims, wherein the first passenger compartment part (1) and/or the second passenger compartment part (2) have shelf elements (22) for accommodating and, in particular, anchoring transport containers (23).

8. Modular passenger compartment according to one of the preceding claims, further comprising a fourth passenger compartment part (4) which has an edge (16) for connection to a further passenger compartment part (5) and which is configured to close off a volume of the passenger compartment (20) to the outside by means of the further passenger compartment part (5).

9. Means of locomotion (10) comprising a modular passenger compartment (20) according to one of claims 1 through 8 and a driving mount (21) which is in each case directly mechanically - and, in particular, also electrically and/or by information technology - connected, via a mechanical interface (25a, 25b), to the first passenger compartment part (1) and/or the second passenger compartment part (2) and/or the third passenger compartment part (3).

## Revendications

1. Habitacle modulaire (20) pour un moyen de déplacement (10) comprenant :
- une première partie d'habitacle (1) avec un premier bord (11),
- une deuxième partie d'habitacle (2) avec un deuxième bord (12),
- une troisième partie d'habitacle (3) avec un troisième bord (13), le premier bord (11) étant conçu de manière correspondante
- par rapport au deuxième bord (12) ainsi que
- par rapport au troisième bord (13), afin de séparer de l'extérieur un volume de l'habitacle (20) sélectivement au moyen de la deuxième partie d'habitacle (2) ou au moyen de la troisième partie d'habitacle(3), et la deuxième partie d'habitacle (2) présentant en outre un quatrième bord (14), qui est conçu de manière correspondante par rapport au troisième bord (13), afin de séparer de l'extérieur le volume de l'habitacle (20) au moyen de la troisième partie d'habitacle (3), les parties d'habitacle (1, 2, 3) présentant une interface respective (25a) pour la connexion temporaire avec une structure porteuse commune (21),
**caractérisée en ce que**
au moins une partie d'habitacle (1) présente un comptoir de service (19) comprenant un mécanisme de réception et de distribution conçu sous la forme d'une station de paquet, par le biais duquel un client (24) se trouvant devant la partie d'habitacle (1) peut introduire un récipient de transport (23) dans l'habitacle (20).

2. Habitacle modulaire selon la revendication 1, dans lequel le premier bord (11) et/ou le deuxième bord (12) et/ou le troisième bord (13) est ou sont des bords périphériques.

3. Habitacle modulaire selon la revendication 1 ou 2, dans lequel
- le premier bord (11) et le deuxième bord (12) ou
- le premier bord (11) et le troisième bord (13) ou
- le deuxième bord (12) et le troisième bord (13) sont destinés à être agencés en butée ou de manière à se chevaucher mutuellement.

4. Habitacle modulaire selon l'une quelconque des revendications précédentes, dans lequel
- le premier bord (11) et le deuxième bord (12) ou
- le premier bord (11) et le troisième bord (13) ou
- le deuxième bord (12) et le troisième bord (13) sont destinés à être agencés de façon à se chevaucher mutuellement, afin de séparer de l'extérieur un volume variable pour l'habitacle (20).

5. Habitacle modulaire selon l'une quelconque des revendications précédentes, dans lequel
- un élément de verrouillage mécanique (6) et/ou
- un élément d'étanchéité (7) et/ou
- une interface électrique (8) et/ou une interface informatique (9) sont prévus dans la zone du premier bord (11) et/ou du deuxième bord (12) et/ou du troisième bord (13) pour la connexion de deux parties d'habitacle (1, 2, 3).

6. Habitacle modulaire selon l'une quelconque des revendications précédentes, dans lequel le moyen de déplacement (10) est
- un moyen de déplacement à capacité de conduite automatique (10) et/ou
- un moyen de déplacement de transport de marchandises (10) et/ou
- un moyen de déplacement à entraînement électrique (10)

7. Habitacle modulaire selon l'une quelconque des revendications précédentes, dans lequel la première partie d'habitacle (1) et/ou la deuxième partie d'habitacle (2) présentent des éléments d'étagère (22) pour la réception et en particulier l'ancrage de récipients de transport (23).

8. Habitacle modulaire selon l'une quelconque des revendications précédentes, comprenant en outre une quatrième partie d'habitacle (4), qui présente un bord (16) pour la connexion avec une autre partie d'habitacle (5) et qui est destinée à séparer de l'extérieur un volume de l'habitacle (20) au moyen de l'autre partie d'habitacle (5).

9. Moyen de déplacement (10) comprenant un habitacle modulaire (20) selon l'une quelconque des revendications 1 à 8 et une structure porteuse (21), qui est reliée respectivement directement de façon mécanique et en particulier également informatique et/ou électrique par le biais d'une interface mécanique (25a, 25b) avec la première partie d'habitacle (1) et/ou la deuxième partie d'habitacle (2) et/ou la troisième partie d'habitacle (3).
